**Europäisches Patentamt**

**European Patent Office**

**Office européen des brevets**

(11) Veröffentlichungsnummer: **0 469 345 B1**

(12) **EUROPÄISCHE PATENTSCHRIFT**

(45) Veröffentlichungstag der Patentschrift: **05.04.95**

(51) Int. Cl.6: **B60T 8/32**

(21) Anmeldenummer: **91111377.7**

(22) Anmeldetag: **09.07.91**

(54) **Verfahren zur Erzeugung von Radbeschleunigungs- und Radverzögerungs-Regelsignalen.**

(30) Priorität: **30.07.90 DE 4024147**

(43) Veröffentlichungstag der Anmeldung:
**05.02.92 Patentblatt 92/06**

(45) Bekanntmachung des Hinweises auf die
Patenterteilung:
**05.04.95 Patentblatt 95/14**

(84) Benannte Vertragsstaaten:
**DE FR GB IT SE**

(56) Entgegenhaltungen:
**EP-A- 0 345 731**
**WO-A-90/06874**
**DE-A- 2 844 279**
**GB-A- 2 028 943**

(73) Patentinhaber: **WABCO Vermögensverwal-
tungs-GmbH
Postfach,
Am Lindener Hafen 21
D-30432 Hannover (DE)**

(72) Erfinder: **Ruhnau, Gerhard
Schneerrener Strasse 53
W-3057 Neustadt 1 (DE)**

(74) Vertreter: **Schrödter, Manfred, Dipl.-Ing.
WABCO Vermögensverwaltungs-GmbH
Postfach 91 12 80
D-30432 Hannover (DE)**

Rank Xerox (UK) Business Services
(3.10/3.09/3.3.3)

## Beschreibung

Die Erfindung bezieht sich auf ein Verfahren gemäß dem Oberbegriff des Patentanspruchs 1.

Bei Fahrzeugen, die mit einem Antiblockiersystem (ABS) ausgerüstet sind, ist es üblich, aus dem Drehverhalten der Räder logische Signale für das jeweilige Radverhalten abzuleiten. Diese Signale werden meist digital für die Radbeschleunigung (+b), die Radverzögerung (-b) und den Radschlupf ($\lambda$) erzeugt. In einer nachfolgenden Logikschaltung oder per Programm eines Rechners werden die drei Signale miteinander verknüpft, in Endstufen verstärkt und schließlich Magnetventilen zugeleitet, welche die Bremszylinder der einzelnen Räder steuern. Ziel des Antiblockiersystems ist es, durch Einregelung eines bestimmten Rad-Schlupfes (etwa 20%) ein Blockieren der Fahrzeugräder zu verhindern und damit bei einer Notbremsung die Lenkbarkeit des Fahrzeuges zu erhalten sowie den Bremsweg zu verkürzen. Moderne Antiblockiersysteme der gattungsgemäßen Art sind mit mindestens einem Mikroprozessor versehen und berechnen die erwähnten Signale per Programm (GB-A 21 52 714).

Aus der DE-A-28 44 279 ist bereits eine Methode bekannt, die erwähnten Beschleunigungs- und Schlupfsignale aus dem Drehverhalten der Räder zu bestimmen. Die Räder sind mit Zahnkränzen versehen, welche von Drehzahl-Sensoren abgetastet werden. Aus den Ausgangssignalen eines Radsensors wird durch Auszählen von Impulsen in einer Periode die Periodendauer, d.h. der zeitliche Abstand zweier benachbarter Zähne, bestimmt. Nach der Division einer Konstanten durch die Periodendauer steht ein digitaler Wert zur Verfügung, der geschwindigkeitsproportional ist. Dieser Vorgang wiederholt sich in jeder Periode.

Zur Bildung der Radbeschleunigung bzw. -verzögerung ($\pm$b) wird die Änderung der Geschwindigkeitswörter während einer vorgegebenen Zeit $\Delta t$ (Zeitbasis) zwischen den Zeitpunkten $t_0$ und $t_1$ untersucht. Wenn sich die Radgeschwindigkeit während dieser Zeit gegenüber dem vorhergehenden Wert mindestens um einen vorgegebenen Wert $\Delta v$ verändert, wird ein (+b)- oder (-b)-Signal, je nach Vorzeichen der Änderung, abgegeben.

Der Nachteil dieser Meßmethode liegt darin, daß in Fällen, in denen der Geschwindigkeitsverlauf einen Knick aufweist, zum Zeitpunkt $t_1$ die Schwelle der Geschwindigkeitsänderung $\Delta v$ nicht ganz erreicht zu sein braucht, obwohl während der Zeitdauer $\Delta t$ kurzzeitig eine relativ hohe Änderung der Geschwindigkeit aufgetreten sein kann. In diesem Fall kann es vorkommen, daß erst dann ein (+b)- oder (-b)-Signal abgegeben wird, wenn die Zeitbasis $\Delta t$ zweifach durchlaufen ist. Dies führt zu ungleichmäßigen Regelamplituden der Antiblockiervorrichtung, da der Druckabbau bzw. -aufbau erst verspätet erfolgt.

Aufgabe der Erfindung ist es daher, eine Realisierung der Regelsignale anzugeben, welche eine schnellere Reaktion auf Geschwindigkeitsänderungen erlaubt.

Diese Aufgabe wird durch die im Patentanspruch 1 angegebene Erfindung gelöst. Die Unteransprüche enthalten zweckmäßige Weiterbildungen.

Durch die Erzeugung einer Rad-Vergleichsgeschwindigkeit $v_{Diff}$ und die ständige Auswertung des Abstands $\Delta$ zwischen $v_{Diff}$ und Radgeschwindigkeit $v_{Rad}$ kann zu jeder Zeit, und damit schneller als beim Stand der Technik, ein Verzögerungssignal (-b) oder ein Beschleunigungssignal (+b) ausgegeben werden.

Das erfindungsgemäße Verfahren wird im folgenden anhand einer Zeichnung näher erläutert. Es zeigen:

**Fig.1 und Fig.2**
Diagramme zur Erläuterung der gemäß der Erfindung erzeugten "Vergleichsgeschwindigkeit" $v_{Diff}$ sowie der Differenz $\Delta$ zwischen der Vergleichsgeschwindigkeit $v_{Diff}$ und der Radgeschwindigkeit $v_{Rad}$.

**Fig.3**
ein Diagramm zur Bildung des Grenzwertes, mit welchem die Differenz $\Delta$ verglichen wird.

**Fig.4**
ein Flußdiagramm zur Erzeugung von (+b)- oder (-b)-Signalen.

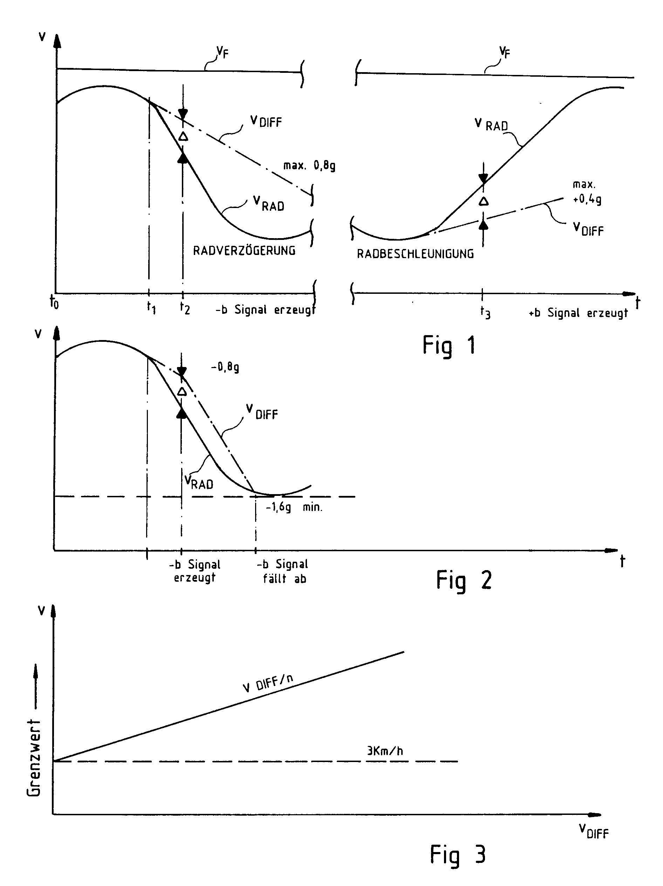

In Fig.1 sind die Fahrzeugreferenzgeschwindigkeit $v_F$, die Radgeschwindigkeit $v_{Rad}$ und die Vergleichsgeschwindigkeit $v_{Diff}$ über der Zeit t aufgetragen.

Die Vergleichsgeschwindigkeit $V_{Diff}$ ist die gefilterte Radgeschwindigkeit. Solange das Rad keine übermäßigen Geschwindigkeitsänderungen erfährt, ist $v_{Diff}$ etwa gleich $v_{Rad}$ ($t_0$ bis $t_1$), und die Differenz $\Delta$ daher Null.

Sobald aber die Differenz $\Delta$ zwischen $v_{Rad}$ und $v_{Diff}$ einen bestimmten Grenzwert überschreitet, wird je nach Richtung ein (-b)-Signal (linke Zeichnungshälfte, Zeitpunkt $t_2$) oder ein (+b)-Signal (rechte Zeichnungshälfte, Zeitpunkt $t_3$) abgegeben.

Als maximal mögliche Steigungen der Vergleichsgeschwindigkeit $v_{Diff}$ - ohne erzeugte Regelsignale - werden vorteilhafterweise maximale physikalisch mögliche Fahrzeugbreschlunigungen bzw. -verzögerungen gewählt. Sie können daher je nach Fahrzeugtyp unterschiedlich sein.

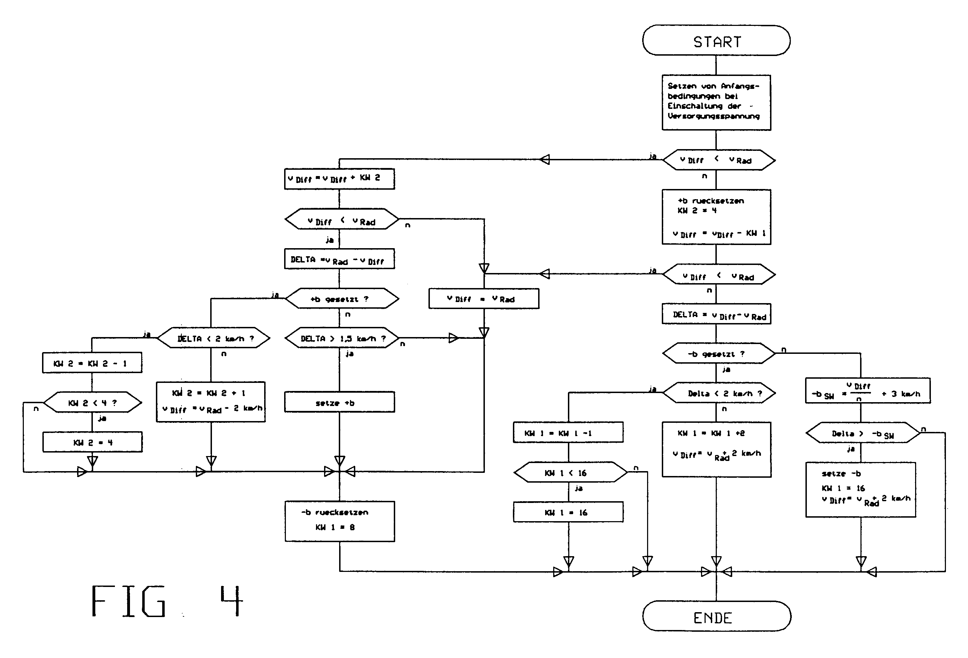

Die Steigung der Rad-Vergleichsgeschwindigkeit $v_{Diff}$ wird in jedem Durchlauf des Flußdiagrammes (siehe Fig.4) neu errechnet.

Ebenso wird der Grenzwert, mit dem die Differenz $\Delta$ verglichen wird, in jedem Durchlauf neu berechnet. Dabei ist vorteilhaft, den Grenzwert für die Bildung der Verzögerungssignale (-b) durch die Summe eines absoluten Geschwindigkeitswertes (z.B. 3 km/h) und eines Bruchteiles der Vergleichsgeschwindigkeit (z.B. $v_{Diff}/n$, n = 1,2,3) zu bilden (siehe Fig.3).

Dies hat in Verbindung mit der Steigung von $v_{Diff}$, die im Bereich physikalisch möglicher Verzögerungen liegt, den folgenden Vorteil:
Bei geregelten Bremsungen auf hohem Reibwert und bei beladenem Fahrzeug ist ein hoher Druck in den Radbremszylindern notwendig, um das Rad überhaupt instabil werden zu lassen, d.h. zum Blockieren zu bringen. Da jedoch bei üblichen Fahrzeugen aus wirtschaftlichen Gründen in diesem Fall kein hoher Bremskraftüberschuß vorhanden ist, läuft das Rad mit einer deutlich geringeren Verzögerung als normal in den Schlupf ("schleichendes Blockieren"). Durch die relativ niedrige Steigung bzw. Verzögerung der Vergleichsgeschwindigkeit $v_{Diff}$ erfolgtein frühes Ansprechen des (-b)-Signales, d.h. noch unterhalb der sonst üblichen Differenzierschwellen von 1,5 bis 2 g (g = Erdbeschleunigung).

Wie in Fig.2 dargestellt, ist es weiterhin möglich und vorteilhaft, den Betrag der Steigung der Vergleichsgeschwindigkeit $v_{Diff}$ beim Auftreten eines Verzögerungssignals (-b) zu verändern. Im gezeichneten Beispiel wird die Steigung von -0,8 g auf -1,6 g erhöht. Dies hat den Vorteil, daß die Vergleichsgeschwindigkeit $v_{Diff}$ sich in etwa an den Verlauf der Radgeschwindigkeit $v_{Rad}$ annähert und einen früheren Wiederabfall des jeweiligen Regelsignales erlaubt. Eine weitere Annäherung geschieht über Korrekturwerte KW 1, KW 2 (siehe Fig. 4), die ebenfalls das Ziel haben, einen möglichst frühen Abfall der Regelsignale (±b) zu ermöglichen.

Die genaue Erzeugungsweise der (±b)-Signale sowie die Anpassung der Vergleichsgeschwindigkeit $v_{Diff}$ und des Grenzwertes läßt sich am besten anhand des in Fig.4 dargestellten Flußdiagramms erläutern. Dieses Flußdiagramm ist Teil einer Programmschleife eines Mikroprozessors, wie z.B. aus der DE-A-28 44 279.7 bekannt. Dabei dient das Hauptprogramm zur Erzeugung von Steuerungssignalen für die Magnetregelventile zur Beeinflussung der Radbremsdrücke bei einem Blockierschutz-System. Die Schleifendurchlaufzeit beträgt bei einem Ausführungsbeispiel etwa 2 Millisekunden.

Die Vergleichsgeschwindigkeit $v_{Diff}$ wird aus der Radgeschwindigkeit $v_{Rad}$ dadurch gebildet, daß je nach Vorzeichen der Differenz zwischen dem beim letzten Schleifendurchlauf berechneten Wert für $v_{Diff}$ und der aktuellen Radgeschwindigkeit ein neuer Wert $v_{Diff}$ berechnet wird, indem der alte Wert um einen Korrekturwert KW 2 vergrößert bzw. um einen Korrekturwert KW 1 verkleinert wird. Führt die Korrektur zu einem Vorzeichenwechsel, wird $v_{Diff}$ auf den Wert von $v_{Rad}$ gesetzt.

Ein Verzögerungssignal (-b) wird dann ausgegeben (gesetzt), wenn eine vorgegebene Differenz $\Delta$ zwischen der Vergleichsgeschwindigkeit $v_{Diff}$ und der Radgeschwindigkeit $v_{Rad}$ auftritt bzw. überschritten wird.

Bei gesetztem Regelsignal ±b wird der jeweilige Korrekturwert KW vergrößert, wenn der Abstand zwischen $v_{Diff}$ und $v_{Rad}$ eine vorgegebene Differenz $\Delta$ (Sollabstand) überschreitet, bzw. verkleinert bei Unterschreitung, wobei aber ein vorgegebener Minimalwert nicht unterschritten werden kann.

Das Begrenzen des Abstandes stellt eine vorgebbare Abfallverzögerung dar, mit dem Ziel, das Regelsignal eine Mindestdauer wirken zu lassen und geringe Schwankungen der gemessenen Radgeschwindigkeit zuzulassen, ohne daß das Regelsignal rückgesetzt wird (Hysterese).

Das Flußdiagramm kann auf verschiedenen Wegen durchlaufen werden. Die Regelsignale ±b werden dabei eingeschaltet (gesetzt) bzw. ausgeschaltet (rückgesetzt). Die Werte für die Radgeschwindigkeit $v_{Rad}$ entsprechen der gemessenen Radgeschwindigkeit. Diese wird, wie oben beschrieben, von den Radsensoren erfaßt.

Die rechte Seite des Flußdiagramms dient zur Erzeugung eines Verzögerungssignales (-b), die linke Seite zur Erzeugung eines Beschleunigungssignales ( +b).

Beim Einschalten der Versorgungsspannung bei Inbetriebnahme des Fahrzeugs werden geeignete Anfangswerte gesetzt für $v_{Diff}$, $v_{Rad}$, KW 1 und KW 2. Das Programm der Antiblockiervorrichtung läuft während der Fahrt ständig, d. h. auch im ungebremsten Zustand, ab.

Dabei laufen u. a. folgende Programmschritte ab:
Abfrage, ob $v_{Diff}$ < $v_{Rad}$.
Falls nein: Löschen eines eventuell anstehenden ( +b)-Signals, Setzen des Korrekturwertes 2 auf den Wert 4 und Bildung der neuen Differenz $v_{Diff}$ = $v_{Diff}$(alt) - KW 1.

Abfrage, ob $v_{Diff}$ immer noch kleiner ist als $v_{Rad}$.
Falls nein: Bildung der Differenz $\Delta$ = $v_{Diff}$ - $v_{Rad}$.

Abfrage, ob ein Verzögerungssignal (-b) gesetzt ist.
Falls ja: Abfrage, ob $\Delta$ < 2 km/h.
Falls nein: Setzen des Sollabstandes $v_{Diff}$ = $v_{Rad}$ + 2 km/h und Vergrößern des Korrekturwertes KW 1 = KW 1 + 2.

Die Vergleichsgeschwindigkeit $v_{Diff}$ wird also um einen festen Wert über der Radgeschwindigkeit $v_{Rad}$ festgelegt. Damit ist dieser Zweig beendet.

Falls (-b) nicht gesetzt war, wird ein Wert -bsw = = $v_{Diff}/n$ + 3 km/h gebildet.
Anschließend wird abgefragt, ob $\Delta$ > -bsw, falls nein: Ende.

Falls ja: Es wird ein Ausgangssignal (-b) gesetzt, der Korrekturwert KW 1 auf 16 erhöht und eine Vergleichsgeschwindigkeit $v_{Diff}$ auf den Wert $v_{Diff} = v_{Rad} + 2$ km/h gesetzt. Hierdurch entsteht der Knick im Verlauf der Vergleichsgeschwindigkeit $v_{Diff}$. Anschließend Ende.

Falls die Abfrage $\Delta < 2$ km/h bejaht ist, wird der Korrekturwert KW 1 um 1 verringert. Anschließend wird der Korrekturwert 1 auf den maximalen Wert 16 begrenzt.

Falls die vorstehende Abfrage, nach der Subtraktion des Korrekturwertes, ob $v_{Diff}$ danach $<v_{Rad}$ ist, bejaht wurde, wird $v_{Diff}$ auf den Wert $v_{Rad}$ gesetzt.

Zur linken Seite des Flußdiagramms gelangt man, falls die Abfrage $v_{Diff} < v_{Rad}$ bejaht wird. Daraus folgt, daß eine Beschleunigung vorhanden sein könnte. Es wird dann zunächst die Vergleichsgeschwindigkeit an die Radgeschwindigkeit angeglichen: $v_{Diff} = v_{Diff} + KW 2$. Anschließend werden folgende Programmschritte durchgeführt:
Anfrage, ob $v_{Diff} < v_{Rad}$.
Falls ja: Setzen $\Delta = v_{Rad} - v_{Diff}$.
Falls ein Beschleunigungssignal (+b) noch nicht gesetzt ist, wird anschließend abgefragt, ob $\Delta < 1,5$ km/h.
Falls ja, wird das Beschleunigungssignal (+b) gesetzt.
Anschließend wird ein eventuell anstehendes (-b)-Signal gelöscht und der Korrekturwert KW 1 auf 8 gesetzt. Damit ist dieser Weg beendet.

Falls die Abfrage $v_{Diff} < v_{Rad}$ ein nein ergibt, wird $v_{Diff} = v_{Rad}$ gesetzt.

Falls die Anfrage: (+b) schon gesetzt: ein ja ergibt, wird abgefragt ob $\Delta < 2$ km/h beträgt. Falls nein, wird KW 2 auf KW 2 + 1 gesetzt und $v_{Diff}$ auf $v_{Rad} - 2$ km/h gesetzt.

Falls die Anfrage $\Delta < 2$ km/h ein ja ergibt, wird KW 2 = KW 2 - 1 gesetzt und im folgenden der Wert für KW 2 auf mindestens 4 gesetzt.

Damit sind alle verschiedenen Durchlaufwege des Flußdiagramms beschrieben. Dies läßt sich natürlich auch in dem durch die Ansprüche festgelegten Rahmen abwandeln.

Mit der erfindungsgemäßen Methode zur Erzeugung von Regelsignalen ergibt sich eine besonders komfortable und adaptive Regelung.

**Patentansprüche**

1. . Verfahren zur Erzeugung von Radbeschleunigungs- und Radverzögerungs-Regelsignalen für ein mit mindestens einem Mikroprozessor realisiertes Antiblockiersystem, das das Radverhalten eines oder mehrerer Fahrzeugräder überwacht, gekennzeichnet durch die folgenden Merkmale:

a) durch den Mikroprozessor wird eine Rad-Vergleichsgeschwindigkeit ($v_{Diff}$) berechnet, die durch eine Filterung der tatsächlichen Radgeschwindigkeit ($v_{Rad}$) erhalten wird und dieser nacheilt;
b) die Filterung ist so bemessen, daß die gefilterte Rad-Vergleichsgeschwindigkeit ($v_{Diff}$) bei einer Radverzögerung mit einer maximalen Steigung von etwa -0,8 g abnimmt, und bei einer Radbeschleunigung mit einer maximalen Steigung von etwa +0,4 g ansteigt (g = Erdbeschleunigung);
c) es wird ein Verzögerungssignal (-b) bzw. ein Beschleunigungssignal (+b) dann erzeugt, wenn eine Differenz ($\Delta$) zwischen der Rad-Vergleichsgeschwindigkeit ($v_{Diff}$) und der tatsächlichen Radgeschwindigkeit ($v_{Rad}$)
einen vorgegebenen Wert übersteigt,
oder einen vorgegebenen Prozentsatz der Rad-Vergleichsgeschwindigkeit ($v_{Diff}$) übersteigt,
oder die Summe aus einem vorgegebenen Geschwindigkeitswert und einem vorgegebenen Prozentsatz der Rad-Vergleichsgeschwindigkeit ($v_{Diff}$) übersteigt.

2. . Verfahren nach Anspruch 1, dadurch gekennzeichnet, daß die Filterung der Radgeschwindigkeit ($v_{Rad}$) vom Auftreten eines Verzögerungssignals (-b) oder Beschleunigungssignales (+b) abhängig ist, derart, daß während des Auftretens eines dieser Regelsignale die Filterung verringert wird.

3. Verfahren nach Anspruch 2, dadurch gekennzeichnet, daß beim Auftreten eines Verzögerungssignals (-b) oder Beschleunigungssignals (+b) die Filterung so verringert wird, daß die Rad-Vergleichsgeschwindigkeit ($v_{Diff}$) mit einer minimalen Steigung von etwa -1,6 g bzw. etwa +0,4 g der Radgeschwindigkeit $v_{Rad}$ folgt.

4. Verfahren nach Anspruch 2 bis 3, dadurch gekennzeichnet, daß die Filterung in Stufen weiter verringert wird, wenn die Differenz ($\Delta$) zwischen der Rad-Vergleichsgeschwindigkeit ($v_{Diff}$) und der Radgeschwindigkeit ($v_{Rad}$) einen vorgegebenen Sollabstand überschreitet.

5. Verfahren nach Anspruch 1 bis 4, dadurch gekennzeichnet, daß die Filterung in Stufen vergrößert wird, wenn der Abstand zwischen der Radgeschwindigkeit ($v_{Rad}$) und der Rad-Vergleichsgeschwindigkeit ($v_{Diff}$) innerhalb des Sollabstandes liegt.

6. Verfahren nach Anspruch 4 und 5, dadurch gekennzeichnet, daß die Verringerung in größeren Stufen vorgenommen wurd als die Vergrößerung.

7. Verfahren nach Anspruch 4, dadurch gekennzeichnet, daß bei Überschreitung vorgegebener Differenzen zwischen der Radgeschwindigkeit ($v_{Rad}$) und der Rad-Vergleichsgeschwindigkeit ($v_{Diff}$) die Rad-Vergleichsgeschwindigkeit ($v_{Diff}$) auf den Sollabstand zur Radgeschwindigkeit ($v_{Rad}$) gesetzt wird.

8. Verfahren nach Anspruch 4 bis 7, dadurch gekennzeichnet, daß der Sollabstand etwa 2 km/h beträgt.

## Claims

1. Method for generating wheel acceleration and deceleration regulating signals for an anti-lock system which is produced by at least one micro-processor and which monitors the behaviour of one or more vehicle wheels, characterised by the following features:
   a) by means of the microprocessor, a wheel comparison speed ($v_{diff}$) is calculated which is obtained by filtering the actual wheel speed ($v_{wheel}$) and lags behind the latter;
   b) the filtering is so arranged that the filtered wheel comparison speed ($v_{diff}$) decreases at a wheel deceleration with a maximum gradient of approximately -0.8 g, and increases at a wheel acceleration with a maximum gradient of approximately +0.4 g (g = acceleration due to gravity);
   c) a deceleration signal (-b) or an acceleration signal (+b) is produced, when a difference ($\Delta$) between the wheel comparison speed ($v_{diff}$) and the actual wheel speed ($v_{wheel}$) exceeds a predetermined value, or exceeds a predetermined percentage of the wheel comparison speed ($v_{diff}$), or exceeds the sum of a predetermined speed value and a predetermined percentage of the wheel comparison speed ($V_{diff}$).

2. Method according to Claim 1, characterised in that the filtering of the wheel speed ($v_{wheel}$) is dependent on the occurrence of a deceleration signal (-b) or an acceleration signal (+b) in such a way that filtering is attenuated during the occurrence of one of these regulating signals.

3. Method according to Claim 2, characterised in that on the occurrence of a deceleration signal (-b) or an acceleration signal (+b), filtering is so attenuated that the wheel comparison speed ($v_{diff}$) follows the wheel speed $v_{wheel}$ with a minimum gradient of approximately -1.6 g or approximately +0.4 g.

4. Method according to Claim 2 to 3, characterised in that filtering is further attenuated in stages when the difference ($\Delta$) between the wheel comparison speed ($v_{diff}$) and the wheel speed ($v_{wheel}$) exceeds a predetermined nominal amount.

5. Method according to Claims 1 to 4, characterised in that filtering is increased in stages when the difference between the wheel speed ($v_{wheel}$) and the wheel comparison speed ($v_{diff}$) lies within the nominal amount.

6. Method according to Claims 4 and 5, characterised in that the attenuation is effected in larger stages than is the increase.

7. Method according to Claim 4, characterised in that when predetermined differences between the wheel speed ($v_{wheel}$) and the wheel comparison speed ($v_{diff}$) are exceeded, the wheel comparison speed ($v_{diff}$) is set to the nominal amount of difference from the wheel speed ($v_{wheel}$).

8. Method according to Claims 4 to 7, characterised in that the nominal amount of difference is approximately 2 km/h.

## Revendications

1. Procédé pour générer des signaux de réglage, représentant des signaux d'accélération de roue et des signaux de décélération de roue, pour un système antiblocage comprenant au moins un microprocesseur et qui surveille le comportement d'une ou plusieurs roues d'un véhicule caractérisé en ce que:
   a) le microprocesseur calcule une vitesse de roue témoin ($v_{di}$) qui est obtenue par un filtrage de la vitesse de roue effective ($v_{ro}$) et retarde par rapport à celle-ci;
   b) le filtrage est tel que la vitesse de roue témoin filtrée ($v_{di}$) diminue dans le cas d'une décélération de roue avec une pente maximale d'environ -0,8 g et augmente dans le cas d'une accélération de roue avec une pente maximale d'environ +0,4 g (g = accélération due à la gravité); et
   c) un signal de décélération (-b) ou un signal d'accélération (+b) est généré lorsqu'une différence ($\Delta$) entre la vitesse de roue témoin ($v_{di}$) et la vitesse de roue effec-

tive ($v_{ro}$) dépasse une valeur préfixée, ou dépasse un pourcentage prédéterminé de la vitesse de roue témoin ($v_{di}$), ou dépasse la somme d'une valeur de vitesse prédéterminée et d'un pourcentage prédéterminé de la vitesse de roue témoin ($v_{di}$).

2. Procédé selon la revendication 1, caractérisé en ce que le filtrage de la vitesse de roue ($v_{ro}$) dépend de l'apparition d'un signal de décélération (-b) ou d'un signal d'accélération (+b), l'agencement étant tel que le filtrage est réduit pendant l'apparition d'un de ces signaux de réglage.

3. Procédé selon la revendication 2, caractérisé en ce que, à l'apparition d'un signal de décélération (-b) ou d'un signal d'accélération (+b), le filtrage est réduit de manière que la vitesse de roue témoin ($v_{di}$) suive la vitesse de roue ($v_{ro}$) avec une pente minimale d'environ -1,6 g ou d'environ +0,4 g.

4. Procédé selon la revendication 2 ou 3, caractérisé en ce que le filtrage est réduit davantage, par paliers, lorsque la différence ($\Delta$) entre la vitesse de roue témoin ($v_{di}$) et la vitesse de roue ($v_{ro}$) dépasse un écart de consigne prédéterminé.

5. Procédé selon les revendications 1 à 4, caractérisé en ce que le filtrage est augmenté, par paliers, lorsque l'écart entre la vitesse de roue ($v_{ro}$) et la vitesse de roue témoin ($v_{di}$) est inférieur à l'écart de consigne.

6. Procédé selon les revendications 4 et 5, caractérisé en ce que la réduction s'opère par paliers plus grands que l'augmentation.

7. Procédé selon la revendication 4, caractérisé en ce que, en cas de dépassement de différences prédéterminées entre la vitesse de roue ($v_{ro}$) et la vitesse de roue témoin ($v_{di}$), cette dernière est ajustée à l'écart de consigne par rapport à la vitesse de roue ($v_{ro}$).

8. Procédé selon les revendications 4 à 7, caractérisé en ce que l'écart de consigne est d'environ 2 km/h.

EP 0 469 345 B1

Fig 1

Fig 2

Fig 3

7

START

Setzen von Anfangs-bedingungen bei Einschaltung der Versorgungsspannung

$v_{Diff} < v_{Rad}$

+b ruecksetzen KW 2 = 4

$v_{Diff} = v_{Diff} - KW 1$

$v_{Diff} < v_{Rad}$

DELTA = $v_{Diff} - v_{Rad}$

-b gesetzt ?

Delta < 2 km/h ?

KW 1 = KW 1 +2
$v_{Diff} = v_{Rad} + 2$ km/h

$-b_{SW} = \frac{v_{Diff}}{...} + 3$ km/h

Delta > $-b_{SW}$

setze -b
KW 1 = 16
$v_{Diff} = v_{Rad} + 2$ km/h

KW 1 = KW 1 -1

KW 1 < 16

KW 1 = 16

$v_{Diff} = v_{Diff} + KW 2$

$v_{Diff} < v_{Rad}$

DELTA = $v_{Rad} - v_{Diff}$

+b gesetzt ?

DELTA > 1,5 km/h ?

setze +b

-b ruecksetzen KW 1 = 8

$v_{Diff} = v_{Rad}$

DELTA < 2 km/h ?

KW 2 = KW 2 +1
$v_{Diff} = v_{Rad} - 2$ km/h

KW 2 = KW 2 - 1

KW 2 < 4 ?

KW 2 = 4

ENDE

FIG. 4

8